(19)

**Europäisches Patentamt**
**European Patent Office**
**Office européen des brevets**

(11) **EP 4 033 022 A1**

(12) **EUROPEAN PATENT APPLICATION**
published in accordance with Art. 153(4) EPC

(43) Date of publication:
**27.07.2022  Bulletin 2022/30**

(21) Application number: **20865535.7**

(22) Date of filing: **08.09.2020**

(51) International Patent Classification (IPC):
**D04H 1/425** $^{(2012.01)}$       **B01D 39/16** $^{(2006.01)}$
**B32B 5/26** $^{(2006.01)}$       **D01D 5/04** $^{(2006.01)}$
**D04H 1/728** $^{(2012.01)}$       **D06M 11/38** $^{(2006.01)}$

(52) Cooperative Patent Classification (CPC):
**B01D 39/16; B32B 5/26; D01D 5/04; D04H 1/425;**
**D04H 1/728; D06M 11/38**

(86) International application number:
**PCT/JP2020/033917**

(87) International publication number:
**WO 2021/054192 (25.03.2021 Gazette 2021/12)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **20.09.2019  JP 2019172270**

(71) Applicant: **FUJIFILM Corporation**
**Tokyo 106-8620 (JP)**

(72) Inventors:
• **NAKAGAWA, Yosuke**
  **ashigara-shi, Kanagawa 250-0193 (JP)**
• **SHIMODA, Yasuhisa**
  **ashigara-shi, Kanagawa 250-0193 (JP)**
• **KANEMURA, Kazuhide**
  **ashigara-shi, Kanagawa 250-0193 (JP)**

(74) Representative: **Parker, Andrew James**
**Meissner Bolte Patentanwälte**
**Rechtsanwälte Partnerschaft mbB**
**Widenmayerstraße 47**
**80538 München (DE)**

(54) **NONWOVEN FABRIC, METHOD FOR PRODUCING NONWOVEN FABRIC, AND FILTER**

(57)     Provided are a nonwoven fabric having excellent filtration accuracy and filtration service life in a case where it is used as a filter, a nonwoven fabric manufacturing method, and a filter.

A nonwoven fabric (10) is formed of fibers (11) of 0.10 $\mu$m or more and 5.00 $\mu$m or less. The nonwoven fabric (10) includes a coarse layer portion (12) and a dense layer portion (14). In the coarse layer portion (12), a void volume Pc is at least 90% and an average pore diameter Dc is in a range of 0.5 $\mu$m or more and 50 $\mu$m or less. In the dense layer portion (14), a void volume Pd is at least 70% and a relative standard deviation of pore diameter distribution is 20% or less.

FIG. 2

EP 4 033 022 A1

**Description**

1. Field of the Invention

The present invention relates to a nonwoven fabric, a nonwoven fabric manufacturing method, and a filter.

2. Description of the Related Art

Nonwoven fabrics formed of fibers have been known. Examples of the fiber include so-called nanofibers having a nano-order diameter of several nanometers or more and less than 1,000 nanometers, so-called micron fibers having a micrometer-order diameter of several micrometers or more and less than 1,000 micrometers, and so-called submicron fibers mainly having a submicron-order diameter of $10^{-1}$ micrometers or more and less than several micrometers.

A fiber structure having a layer consisting of fibers such as a nonwoven fabric is used as a filter or the like. For example, JP2013-236986A discloses, as an example formed of a nonwoven fabric formed of fibers having an average fiber diameter of several micrometers, a tubular filter including a filtration layer consisting of three kinds of nonwoven fabrics each having a specific average pore diameter and the like.

An electric field spinning method has been known as a method of manufacturing fibers such as submicron fibers and a nonwoven fabric formed of such fibers. The electric field spinning method is also called an electrospinning method or the like, and is performed using, for example, an electric field spinning device (also called an electrospinning device) having a nozzle, a collector, and a power source. In a general electric field spinning device, a voltage is applied between a nozzle and a collector by a power source to, for example, negatively charge the nozzle and positively charge the collector.

In a case where a solution as a raw material is discharged from the nozzle in a state in which a voltage is applied, a conical protrusion called a Taylor cone, composed of the solution, is formed in an opening at a tip end of the nozzle. In a case where the applied voltage is gradually increased and a Coulomb force exceeds a surface tension of the solution, the solution flies out from a tip end of the Taylor cone, and a spinning jet is formed. The spinning jet is moved to the collector by a Coulomb force and is collected as fibers on the collector, and a nonwoven fabric formed of the fibers is formed on the collector.

**SUMMARY OF THE INVENTION**

In the tubular filter disclosed in JP2013-236986A, each of the filtration accuracy and the filtration service life estimated using a suspension for a test in which a powder for a test (JIS-11, Kanto loam (baked product) having a diameter of about 1 to 4 $\mu$m) according to JIS Z 8901 is dispersed in water is a specific value, and the filter is suitable for eliminating solids such as the above powder from liquids.

A high void volume of a nonwoven fabric leads to an improvement in filtration service life of a filter formed of the nonwoven fabric. However, the nonwoven fabric used as the above tubular filter does not have a high void volume of 90% or more. In addition, in the above tubular filter, in order to realize the filtration accuracy, it is necessary to use a filtration layer formed by preparing three kinds of nonwoven fabrics, and then connecting and winding the fabrics. Therefore, with a nonwoven fabric which can be used as a filter realizing excellent filtration accuracy by a simpler structure and having more excellent filtration service life, it is possible to expect further expansion of applications from the viewpoint of cost and performance.

Therefore, an object of the present invention is to provide a nonwoven fabric having excellent filtration accuracy and filtration service life in a case where it is used as a filter, a nonwoven fabric manufacturing method, and a filter.

A nonwoven fabric according to an aspect of the present invention is formed of fibers having an average diameter in a range of 0.10 $\mu$m or more and 5.00 $\mu$m or less. The nonwoven fabric includes a coarse layer portion and a dense layer portion having different void volumes. In the coarse layer portion, a void volume Pc is at least 90% and an average pore diameter Dc is in a range of 0.5 $\mu$m or more and 50 $\mu$m or less. In the dense layer portion, a void volume Pd is at least 70% and a relative standard deviation of pore diameter distribution is 20% or less. The void volume Pc of the coarse layer portion and the void volume Pd of the dense layer portion satisfy a relationship of Pc>Pd, and the average pore diameter Dc of the coarse layer portion and an average pore diameter Dd of the dense layer portion satisfy a relationship of Dc>Dd.

It is preferable that the dense layer portion has a fusion point at which the fibers are fused to each other, and the number of fusion points is 500/mm² or more.

It is preferable that a surface on the coarse layer portion side has a critical wettable surface tension of 70 mN/m or more.

It is preferable that the fibers are made of a cellulosic polymer. In addition, it is preferable that the fibers are made of cellulose acylate.

It is preferable that in the coarse layer portion, the fibers are made of cellulose triacetate or cellulose diacetate. It is preferable that in the dense layer portion, the fibers are made of cellulose acetate propionate or cellulose acetate butyrate.

It is preferable that the fibers are continuous fibers.

It is preferable that the coarse layer portion and the dense layer portion are formed continuously and integrated with each other.

In addition, in a nonwoven fabric manufacturing method according to an aspect of the present invention, a voltage is applied between a solution prepared by dissolving a fiber material in a solvent and a collector, and fibers formed by ejecting the solution from a nozzle are collected on a surface of the collector. The nonwoven fabric manufacturing method includes a first collecting step, a second collecting step, a tension imparting step, and a heating step. In the first collecting step, fibers formed using a first solution as the solution are collected to form a first layer material. In the second collecting step, following the first collecting step, fibers formed using a second solution different from the first solution as the solution are collected to form a second layer material. In the tension imparting step, a tension is imparted in an in-plane direction of a nonwoven fabric material including the first layer material and the second layer material. In the heating step, the nonwoven fabric material to which the tension is imparted is heated to form a first layer from the first layer material and/or to form a second layer from the second layer material.

It is preferable that the fiber material is a cellulosic polymer. In addition, it is preferable that the fiber material is made of cellulose acylate.

It is preferable that in the first solution, the fiber material is cellulose triacetate or cellulose diacetate. It is preferable that in the second solution, the fiber material is cellulose acetate propionate or cellulose acetate butyrate.

It is preferable that in the first solution, the fiber material is cellulose triacetate, and in the second solution, the fiber material is cellulose acetate propionate or cellulose acetate butyrate.

It is preferable that the solvent is a mixture of a plurality of compounds.

It is preferable that the solvent contains dichloromethane and methanol.

It is preferable that a hydrophilization step of performing saponification is included.

In addition, a filter according to an aspect of the present invention is formed of the nonwoven fabric according to any one of the above items, and includes: a coarse layer portion as one surface; and a dense layer portion as the other surface.

According an aspect of the present invention, it is possible to provide a nonwoven fabric having excellent filtration accuracy and filtration service life in a case where it is used as a filter, a nonwoven fabric manufacturing method, and a filter.

## BRIEF DESCRIPTION OF THE DRAWINGS

Fig. 1 is a schematic perspective view of a part of a nonwoven fabric according to an embodiment.
Fig. 2 is a cross-sectional view schematically showing a configuration of an example of the nonwoven fabric.
Fig. 3 is a schematic view of a nonwoven fabric manufacturing facility.
Fig. 4 is a schematic view of an example in which one nonwoven fabric manufacturing device is used.
Fig. 5 is a schematic view of an example in which two nonwoven fabric manufacturing devices are used.

## DESCRIPTION OF THE PREFERRED EMBODIMENTS

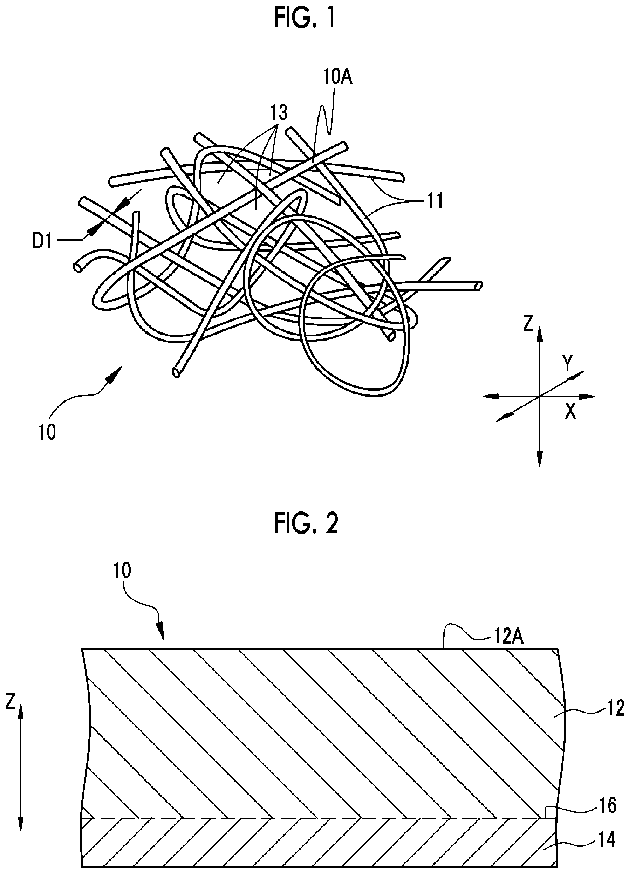

A nonwoven fabric 10 according to this embodiment shown in Fig. 1 is formed of fibers 11. In the nonwoven fabric 10, a plurality of voids 13 as spatial domains defined by the fibers 11 are formed as a part in which air exists. In this way, the nonwoven fabric 10 contains air inside. In Fig. 1, only a part of the nonwoven fabric 10 in a thickness direction Z on the side of one surface (hereinafter, referred to as a first surface) 10A is drawn to avoid the complication of the drawing. Therefore, the nonwoven fabric 10 has a structure in which a large number of the fibers 11 further overlap on the lower side of Fig. 1 in the thickness direction Z. The nonwoven fabric 10 includes two layer portions, a coarse layer portion and a dense layer portion which are different in shape of the voids 13 and the like in the thickness direction Z. In this embodiment, the coarse layer portion and the dense layer portion are formed continuously with no break, and the nonwoven fabric 10 is formed as an integrated body.

In a case where the plurality of voids 13 communicate with each other in the thickness direction Z of the nonwoven fabric 10, these form through holes in the thickness direction Z of the nonwoven fabric 10. The holes function as filter holes in a case where the nonwoven fabric 10 is used as, for example, a filter. In addition, some voids 13 do not form holes, and exist as, for example, non-through spatial domains in the thickness direction Z, closed by the fibers 11. In a case where the nonwoven fabric 10 is used as a filter, the spatial domain also has a function of capturing and fractionating a substance having a specific size or the like.

The nonwoven fabric 10 may include the fibers 11, and may include other fibers made of different materials in addition to the fibers 11. In Fig. 1, the first surface 10A is drawn along the X-Y plane, and the Z-direction orthogonal to the X-Y plane is defined as the thickness direction of the nonwoven fabric 10.

As shown in Fig. 2, the nonwoven fabric 10 includes at least two layer portions, a coarse layer portion 12 and a dense layer portion 14 having different void volumes in the thickness direction Z. The void volume refers to the volume percent of air contained in the nonwoven fabric. Although the coarse layer portion 12 and the dense layer portion 14 have different void volumes, the coarse layer portion 12 and the dense layer portion 14 are formed continuously with no break. Therefore, it is thought that the nonwoven fabric 10 is formed as an integrated body, and in a boundary portion 16 between the coarse layer portion 12 and the dense layer portion 14, there is a part where both the layer portions are mixed.

The fibers 11 are formed to have a substantially constant diameter D1 (Fig. 1). An average (hereinafter, referred to as an average diameter) Df of diameters D1 (unit: $\mu$m) is in a range of 0.10 $\mu$m or more and 5.00 $\mu$m or less. In a case where the average diameter Df is 0.10 $\mu$m or more, the detachment of fiber pieces is suppressed as compared to a case where the average diameter is less than 0.10 $\mu$m. Suppression of the detachment of fiber pieces means that the detachment of fiber pieces from the nonwoven fabric 10 is suppressed, and suppression of the detachment of fiber pieces leads to excellent durability of the nonwoven fabric 10.

In a case where the average diameter Df is 5.00 $\mu$m or less, the void volume of the whole nonwoven fabric 10 is larger than in a case where the average diameter is more than 5.00 $\mu$m. Thus, a filtration processing amount in a case where the nonwoven fabric is used as a filter is increased, and the filtration service life is improved. The filtration service life means that the filtration capacity is large as a whole due to the fact that the processing amount per unit time is large and/or constant filtration performance is maintained over a long time by maintaining a state in which clogging is suppressed. In addition, due to the increased void volume, for example, sound absorbing performance or heat insulating performance in a case where the nonwoven fabric is used as a sound absorbing material or a heat insulating material is increased. In addition, in a case where the average diameter Df is 5.00 $\mu$m or less, the nonwoven fabric 10 is softer even with the same void volume and is used for wider applications than in a case where the average diameter is more than 5.00 $\mu$m. The average diameter of the fibers 11 is more preferably in a range of 0.15 $\mu$m or more and 4.00 $\mu$m or less, and even more preferably in a range of 0.20 $\mu$m or more and 3.00 $\mu$m or less.

The average diameter Df can be obtained by measuring diameters of 100 fibers 11 from an image taken by a scanning electron microscope and calculating an average value.

In addition, the fibers 11 are preferably continuous fibers. The continuous fibers mean fibers having an aspect ratio, that is a ratio of a length of the fiber in an axial direction to a diameter of the fiber, of 100 or more. The fibers 11 according to this embodiment are substantially continuous fibers, and the continuous fibers 11 form the nonwoven fabric 10 by being folded in the thickness direction. Substantially continuous fibers do not mean that all the fibers 11 have an aspect ratio of 100 or more, but mean that most fibers 11 are long continuous fibers having an aspect ratio of 100 or more even in a case where there may be short fibers having an aspect ratio of 100 or less in the fibers 11.

In the nonwoven fabric 10, the coarse layer portion 12 has a void volume Pc of at least 90%, that is, 90% or more. The nonwoven fabric 10 including a part having an extremely high void volume Pc as described above has improved filtration service life in a case where the nonwoven fabric is used as a filter, as compared to a case where the nonwoven fabric does not include a part having such a high void volume Pc. In addition, in a case where the nonwoven fabric 10 includes a part having a void volume Pc of 90% or more, the nonwoven fabric contains a large amount of air inside and is soft. Since a large amount of air is contained as described above, the nonwoven fabric is used for wider applications than in a case where it does not contain a part having a void volume Pc of 90% or more. For example, the nonwoven fabric can be used as a sound absorbing material or a heat insulating material since it exhibits excellent sound absorbing performance and heat insulating performance.

The void volume Pc of the coarse layer portion 12 is preferably 99.8% or less from the viewpoint that the nonwoven fabric 10 secures higher durability. The void volume Pc of the coarse layer portion 12 is more preferably in a range of 90% or more and 99.8% or less, even more preferably in a range of 95% or more and 99.6% or less, and particularly preferably in a range of 97% or more and 99.4% or less.

In the nonwoven fabric 10, the dense layer portion 14 has a void volume Pd of at least 70%, that is, 70% or more. The void volume Pc of the coarse layer portion 12 and the void volume Pd of the dense layer portion 14 satisfy a relationship of Pc>Pd. In the nonwoven fabric 10, in a case where the dense layer portion 14 combined with the coarse layer portion 12 has such a specific void volume Pd, the filtration accuracy and the filtration service life in a case where the nonwoven fabric is used as a filter are improved. The filtration accuracy is a measure for blocking solids of a specific size, and also includes excellent size separation performance. In a case where the nonwoven fabric 10 is used as a filter, for example, a liquid to be filtered passes through the filter from the coarse layer portion 12.

The void volume Pd of the dense layer portion 14 is preferably 99.8% or less from the viewpoint that the nonwoven fabric 10 secures higher durability. The void volume Pd of the dense layer portion 14 is more preferably in a range of 70% or more and 99.8% or less, even more preferably in a range of 80% or more and 99.6% or less, and particularly preferably in a range of 90% or more and 99.4% or less.

In a case where a weighing capacity is represented by W (unit: g/m$^2$) and a thickness is represented by H (unit: mm) in each of the coarse layer portion 12 and the dense layer portion 14 of the nonwoven fabric 10, and a specific gravity of the fibers 11 is represented by ρ1 (unit: kg/m$^3$), the void volume (unit: %) can be obtained by [1-{(W/1000)/(H/1000)}/ρ1]×100. The coarse layer portion 12 or the dense layer portion 14 of the nonwoven fabric 10 is cut into a 5 cm × 5 cm piece, a mass thereof is measured by an electronic balance (manufactured by METTLER TOLEDO), and a value obtained by converting the measured value per m$^2$ is used as the weighing capacity W. In this example, the thickness H is measured by a noncontact laser displacement gauge (LK-H025 manufactured by KEYENCE CORPORATION).

In the nonwoven fabric 10, the fibers 11 are intertwined and integrated with each other. In the boundary portion 16 between the coarse layer portion 12 and the dense layer portion 14, in a part where both the layer portions are mixed, there is a part where the fibers 11 forming the coarse layer portion 12 and the fibers 11 forming the dense layer portion 14 are intertwined.

In the coarse layer portion 12, it is preferable that in a part where the fibers 11 overlap in the thickness direction Z and/or a part where the fibers are in contact with each other in a plane direction (in the X-Y plane) of the nonwoven fabric 10, the fibers do not adhere to each other (nonadhesive), and this also applies to this example. However, there may be a part where the fibers adhere to each other, and even in a case where the fibers adhere to each other, the adhesive strength therebetween is suppressed to be small so that the fibers can be easily peeled off with a very weak force.

The dense layer portion 14 has a part where in a part where the fibers 11 overlap in the thickness direction Z and/or a part where the fibers are in contact with each other in the plane direction (in the X-Y plane) of the nonwoven fabric 10, the fibers do not adhere to each other (nonadhesive), and a part where the fibers 11 adhere to each other. Even in a case where the fibers adhere to each other, the adhesive strength therebetween may be suppressed to be small so that the fibers can be easily peeled off with a very weak force.

The adhesion is caused by, for example, fusion of the fibers 11 to each other by heat. In this case, the dense layer portion 14 has a fusion point at which the fibers 11 are fused to each other. The number of fusion points in the dense layer portion 14 is preferably 500/mm$^2$ or more. In a case where the number of fusion points is 500/mm$^2$ or more, the fibers form a net-like structure, and intervals between the fibers rarely vary. Whereby, excellent pore diameter uniformity and film hardness are obtained. In particular, in a case where the nonwoven fabric 10 combined with the coarse layer portion 12 is used as a filter, it has excellent ability to suppress fiber falling from the nonwoven fabric. In addition, the number of fusion points is preferably 50,000/mm$^2$ or less since the opening ratio is maintained. The number of fusion points is more preferably in a range of 1,000/mm$^2$ or more and 30,000/mm$^2$ or less, even more preferably in a range of 1,500/mm$^2$ or more and 15,000/mm$^2$ or less, and particularly preferably in a range of 2,000/mm$^2$ or more and 10,000/mm$^2$ or less.

The number of fusion points in the dense layer portion 14 can be obtained by measuring the number of fusion points in a specific range from an image taken by a scanning electron microscope, and calculating an average number of fusion points per mm$^2$.

As described above, in the nonwoven fabric 10, the fibers 11 are appropriately in a state of being intertwined with each other or partially adhering to each other, and thus have a high void volume. Thus, in a case where the nonwoven fabric 10 is used as a filter, it has excellent filtration accuracy and filtration service life. In the filtration accuracy, size separation performance is particularly excellent. For example, the nonwoven fabric has high performance in which substances larger than the average pore diameter of the dense layer portion 14 are not transmitted, and substances smaller than the average pore diameter of the dense layer portion 14 are transmitted.

In addition, the nonwoven fabric 10 is deformable, and thus it has a high degree of freedom in processing and the like in a case where it is used as a filtering medium, a heat insulating material, or a sound absorbing material. In a case where the fibers 11 have a small diameter of, for example, 0.10 μm or more and 5.00 μm or less, these can be split by locally imparting a tension. Therefore, the nonwoven fabric also has excellent workability.

The thickness of the nonwoven fabric 10 is not particularly limited. It can be adjusted depending on the amount of the fibers 11 deposited, the conditions of the heating step, or the like as will be described later, and may be appropriately set according to the handling situation and/or the application. The thickness of the nonwoven fabric 10 is the sum of the thickness of the coarse layer portion 12 and the thickness of the dense layer portion 14, and each thickness is adjusted depending on the amount of the fibers 11 deposited in each part, the conditions of the heating step, or the like. In addition, the thickness of the nonwoven fabric 10 or the thickness of each layer portion is a value measured in a state in which the nonwoven fabric is placed substantially horizontally with the dense layer portion 14 facing down and the coarse layer portion 12 facing up as shown in Fig. 2.

The thickness of the nonwoven fabric 10 can be appropriately set according to the application. For example, the thickness is preferably in a range of 100 μm or more and 100,000 μm or less from the viewpoint of handleability (handling) such as workability and durability in the handling situation. In addition, in a case where the nonwoven fabric is used as a filter or for other applications, it may be thickened (for example, in a range of 2,000 μm or more and 100,000 μm or less) to be used singly as it is, or thinned (for example, in a range of 200 μm or more and 1,000 μm or less) to be used in a piled state. In this example, the thickness is 4,000 μm. The nonwoven fabric 10 has a high degree of freedom in thickness as described above, while having a high void volume and excellent filtration accuracy and filtration service life. In addition, the nonwoven fabric is soft due to a large amount of air contained, and has wide processing applications.

The thickness of each layer portion can also be appropriately set according to the application. For example, the dense layer portion 14 is preferably in a range of 10 μm or more and 1,000 μm or less from the viewpoint of achieving both filter size reduction and high-accuracy size separation. In addition, the coarse layer portion 12 is preferably in a range of 100 μm or more and 10,000 μm or less from the viewpoint of filter size reduction and filtration service life.

The mass per unit area of each layer portion can be appropriately set according to the application. For example, the mass per unit area of the dense layer portion 14 is preferably in a range of 2 g/m$^2$ or more and 100 g/m$^2$ or less from the viewpoint of adhesion between the fibers. In addition, the mass per unit area of the coarse layer portion 12 is preferably in a range of 10 g/m$^2$ or more and 500 g/m$^2$ or less from the viewpoint of handleability.

Here, the average pore diameters of the coarse layer portion 12 and the dense layer portion 14 in which the plurality of voids 13 are formed in the nonwoven fabric 10 are represented by Dc and Dd, respectively. The average pore diameter Dc of the coarse layer portion 12 is in a range of 0.5 μm or more and 50 μm or less. The average pore diameter Dc is more preferably in a range of 2 μm or more and 30 μm or less, and even more preferably in a range of 4 μm or more and 20 μm or less. The average pore diameter Dd of the dense layer portion 14 is in a range of 0.5 μm or more and 50 μm or less. The average pore diameter Dd is more preferably in a range of 2 μm or more and 30 μm or less, and even more preferably in a range of 4 μm or more and 20 μm or less. In the nonwoven fabric 10, the average pore diameter Dc of the coarse layer portion 12 and the average pore diameter Dd of the dense layer portion 14 satisfy a relationship of Dc>Dd.

Each of the average pore diameter Dc and the average pore diameter Dd can be obtained by the following method. First, a 5 cm square (5 cm × 5 cm) sample is cut from the nonwoven fabric 10. The sample is immersed in GALWICK (1,1,2,3,3,3-hexafluoropropene, manufactured by Porous Materials Inc.), which is a liquid having a surface tension of 15.3 mN/m, and then the measurement by a bubble point method using a perm porometer (manufactured by Porous Materials Inc.) is performed to obtain the average pore diameter Dc or the average pore diameter Dd.

In the dense layer portion 14, the relative standard deviation ((standard deviation/average value)× 100) of the pore diameter distribution is 20% or less. The relative standard deviation is also referred to as a coefficient of variation (CV). The relative standard deviation of pore diameter distribution is calculated from the pore diameter distribution or distribution curve output by the perm porometer. Since the dense layer portion 14 has a uniform pore diameter and a high void volume as described above, the nonwoven fabric has excellent filtration accuracy and filtration service life, and particularly has high size separation performance in a case where it is used as, for example, a filter. The standard deviation of the pore diameter is more preferably 15% or less, and even more preferably 10% or less, and the smaller the standard deviation of the pore diameter, the better.

A surface 12A (Fig. 2) of the nonwoven fabric 10 on the side of the coarse layer portion 12, which is a surface in the thickness direction Z, preferably has a critical wettable surface tension (CWST) of 70 mN/m or more. CWST is used as an indicator showing the wettability of a porous body. CWST is described in JP1989-249063A (JP-H01-249063A). CWST of the surface 12A is preferably 70 mN/m or more since in a case where the nonwoven fabric 10 is used as a filter, the filtration speed is excellent and the effective filtration area is wide. CWST of the surface 12A is more preferably 70 mN/m or more, even more preferably 78 mN/m or more, and particularly preferably 80 mN/m or more.

For example, in a case where the fibers 11 forming the nonwoven fabric 10 are made of a cellulosic polymer, CWST can be adjusted by a method such as imparting hydrophilicity to the nonwoven fabric 10 as will be described later. In order to keep CWST in the above range, for example, the degree of impartation of hydrophilicity may be adjusted in a hydrophilicity imparting step.

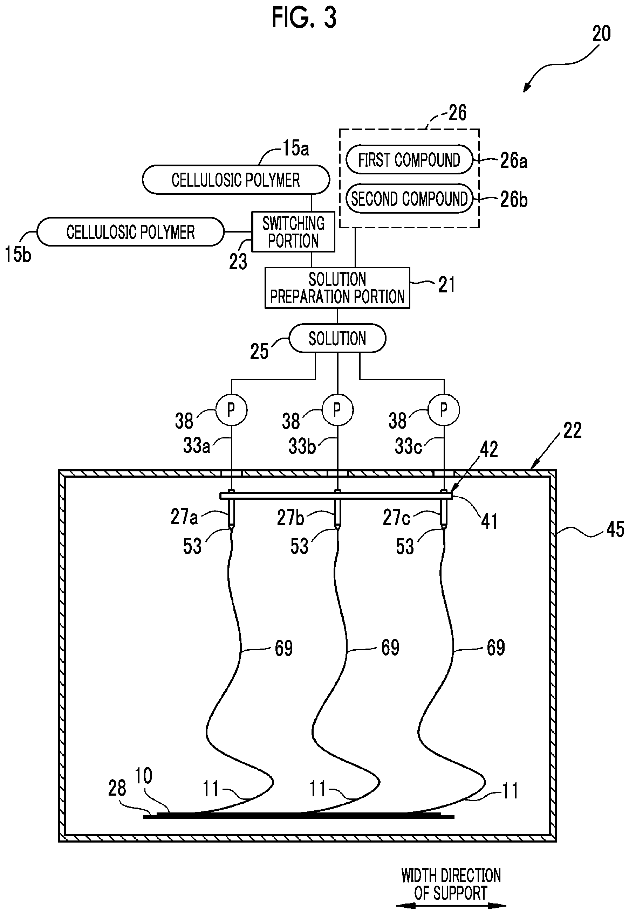

The fibers 11 are formed of a resin (polymer). As the polymer, a polymer which can be turned into a solution by dissolving in a solvent is used. The polymer is preferably a polymer which can be turned into a solution by dissolving in an organic solvent. Examples thereof include polymethylmethacrylate (hereinafter, referred to as PMMA), cellulosic polymer, polyester, polyurethane, and elastomer. Among these, a cellulosic polymer is preferably used since hydrophilicity can be imparted by a saponification treatment as will be described later. In this example, for example, a cellulosic polymer 15 (see Fig. 3) is used.

The cellulosic polymer 15 is preferably cellulose acylate. Therefore, the fibers 11 are preferably made of cellulose acylate. Cellulose acylate is a cellulose ester in which some or all of hydrogen atoms constituting the hydroxy group of cellulose are substituted with an acyl group. Cellulose acylate is preferably any one selected from the group consisting of cellulose triacetate (TAC, triacetyl cellulose), cellulose diacetate (DAC, diacetyl cellulose), cellulose acetate propionate (CAP, cellulose acetate propionate), and cellulose acetate butyrate (CAB, cellulose acetate butyrate).

The coarse layer portion 12 and the dense layer portion 14 are preferably formed of different materials. In the coarse layer portion 12, the fibers 11 are preferably made of cellulose triacetate or cellulose diacetate. In the dense layer portion 14, the fibers 11 are preferably made of cellulose acetate propionate or cellulose acetate butyrate. This is because, by using these compounds, the void structure of the coarse layer portion 12 or the dense layer portion 14 as described above can be easily exhibited.

As described above, according to the above configuration, the nonwoven fabric 10 includes a specific layer portion having the coarse layer portion 12 and the dense layer portion 14, and thus, for example, in a case where the nonwoven fabric 10 is used as a filter, the filtration service life is long, and the filtration accuracy is high. Since the nonwoven fabric 10 includes a layer portion having a high void volume of 90% or more, the amount of an aqueous solution which can be filtered in a case where the nonwoven fabric is used as a filter is large, and the filtration service life is long. In addition, the nonwoven fabric 10 contains a large amount of air and has excellent heat insulating performance, sound absorbing performance, and ventilation performance. Therefore, the nonwoven fabric is suitable for being used as a heat insulating building material for a floor, a wall, or a ceiling, a heat insulating member for a vehicle, a sound absorbing material for a house, a vehicle, or an electric product, a part requiring ventilation properties by lamination, and the like.

Furthermore, since the nonwoven fabric 10 includes a layer portion having a specific value of the relative standard deviation of pore diameter distribution, the nonwoven fabric not only blocks substances of a specific size or larger, but also allows more substances of a specific size or smaller to pass therethrough in terms of filtration accuracy, and thus it has high size separation performance. Therefore, the nonwoven fabric is suitable as a filter for separating or removing a target substance from a mixture of a solid and a liquid (solid-liquid mixture), and is also useful as a filter which fractionates a solid of a specific size.

Accordingly, the nonwoven fabric 10 can be particularly preferably used as, for example, a filter for food (including beverage), medical use, ultrapure water, or a high-purity chemical, requiring high-accuracy separation performance due to concerns about mixing of foreign substances (contamination). Due to the high void volume, it clogs rarely and is advantageous in that pressure loss is reduced. Specific examples thereof include a filter for removal which removes fine particles and/or microorganisms from a beverage, a pretreatment filtration filter for industrial pure water, and a filter for a test which collects a specific cell from a body fluid such as blood or saliva. Examples of the filter for a test include a filter for a test such as a blood glucose level test, an urine glucose test, a lifestyle-related disease test, a genetic test, a tumor marker test, or a blood test. Examples of the application utilizing the size separation performance include cell concentration and protein concentration, and the nonwoven fabric can also be preferably used for such applications.

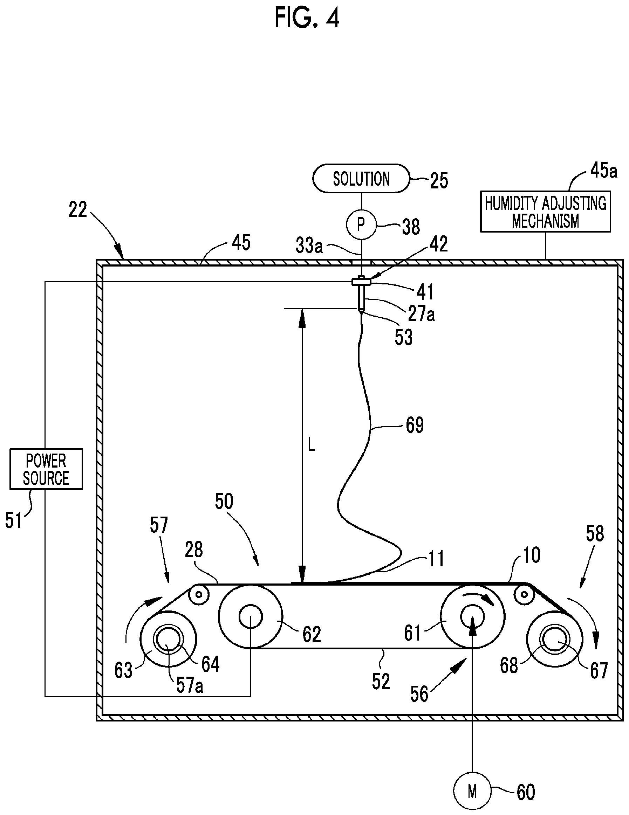

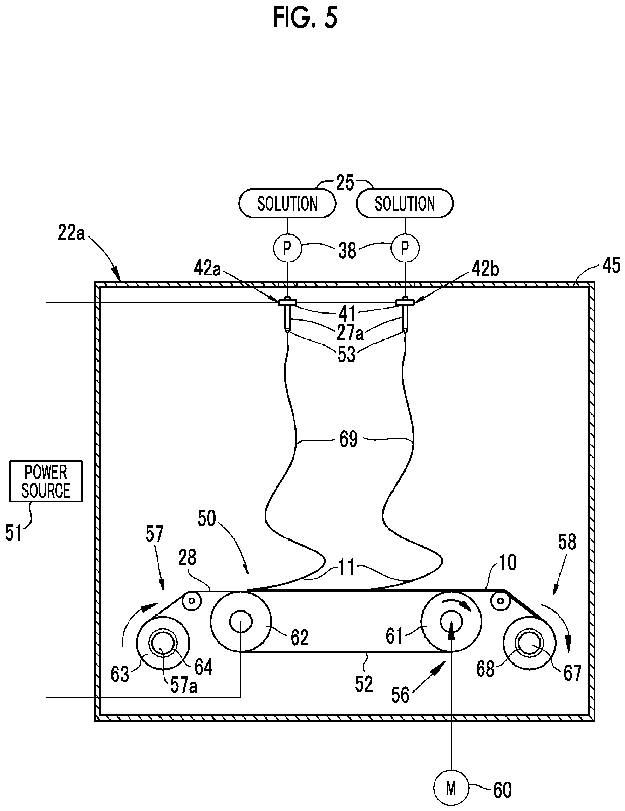

In order to manufacture the nonwoven fabric 10, first, for example, a nonwoven fabric material 10a is formed by a nonwoven fabric manufacturing facility 20 shown in Fig. 3. The nonwoven fabric manufacturing facility 20 is for forming fibers 11a and 11b and for manufacturing a nonwoven fabric material 10a which is a material of the nonwoven fabric 10 using an electric field spinning method. The fibers 11a form a dense layer member 14a, and the fibers 11b form a coarse layer member 12a. The nonwoven fabric manufacturing facility 20 includes a solution preparation portion 21 and c. The details of the nonwoven fabric manufacturing device 22 are shown in another drawing, and in Fig. 4 or 5, only a part of the nonwoven fabric manufacturing device 22 is shown.

The nonwoven fabric material 10a includes the dense layer member 14a and the coarse layer member 12a. The dense layer member 14a and the coarse layer member 12a become the dense layer portion 14 and the coarse layer portion 12, respectively, by undergoing a tension imparting step and a heating step after formation of the nonwoven fabric material 10a. First, the nonwoven fabric manufacturing facility 20 forms the dense layer member 14a or the coarse layer member 12a, which is a first layer material (first collecting step). Next, the facility forms the coarse layer member 12a or the dense layer member 14a, which is a second layer material, on the dense layer member 14a or the coarse layer member 12a formed (second collecting step), and thus the nonwoven fabric material 10a is formed. Either the dense layer member 14a or the coarse layer member 12a may be formed first, and the dense layer member 14a is preferably formed first in order to keep the void volume of the coarse layer portion higher. In this embodiment, the dense layer member 14a is formed first.

The nonwoven fabric manufacturing facility 20 is used to form the nonwoven fabric material 10a consisting of the dense layer member 14a and the coarse layer member 12a. The method is not limited as long as the respective layer members can be sequentially formed by the first collecting step and the second collecting step as described above. Examples thereof include a batch manufacturing method using a nonwoven fabric manufacturing device 22 having one nozzle unit 42, and a continuous manufacturing method using a nonwoven fabric manufacturing device 22a having two nozzle units 42a and 42b.

First, the method using the nonwoven fabric manufacturing device 22 having one nozzle unit 42 will be described. As shown in Fig. 3 or 4, in the method using the nonwoven fabric manufacturing device 22 having one nozzle unit 42, a cellulosic polymer 15a (first solution) forming the dense layer portion 14 is sent to the solution preparation portion 21 by a switching portion 23 to form the dense layer member 14a in the nonwoven fabric manufacturing facility 20 and the nonwoven fabric manufacturing device 22. After that, a collector on which the dense layer member 14a is formed is disposed at a predetermined position, and the switching portion 23 switches the cellulosic polymer to send a cellulosic polymer 15b (second solution) forming the coarse layer portion 12 to the solution preparation portion 21 so that the coarse layer member 12a is formed on a support 28 on which the dense layer member 14a is formed. By forming the coarse layer member 12a on the dense layer member 14a in an overlapping manner as described above, the nonwoven fabric material 10a is formed.

The cellulosic polymer 15 is a generic term for the cellulosic polymers 15a and 15b. Therefore, a solution 25 contains the cellulosic polymer 15a in the formation of the dense layer member 14a, and contains the cellulosic polymer 15b in the formation of the coarse layer member 12a. In addition, the fibers 11 includes the fibers 11a forming the dense layer member 14a and the fibers 11b forming the coarse layer member 12a. The fibers 11 is a generic term for the fibers 11a and 11b.

In the nonwoven fabric manufacturing facility 20, the solution preparation portion 21 is for preparing the solution 25 forming the fibers 11. The solution preparation portion 21 prepares the solution 25 by dissolving the cellulosic polymer 15 as a fiber material to become the fibers 11 in a solvent 26. The solution 25 is jetted from each of nozzles 27a to 27c to be described later to form the fibers 11 on the support 28. In the following description, in a case where the nozzles 27a, 27b, and 27c are not distinguished, the nozzle 27 is written.

In a case where the evaporation rate of the solvent 26 is represented by V (unit: ml/s, milliliters/sec), the evaporation rate V and the average diameter Df of the fibers 11 formed on the support 28 satisfy $1 \leq V/Df \leq 10$. $2 \leq V/Df \leq 9$ is more preferable, and $3 \leq V/Df \leq 8$ is even more preferable. V/Df is adjusted in the above range by adjusting at least one of the evaporation rate V or the average diameter Df.

The evaporation rate V is obtained by Expression (1). C represents the concentration (unit: %) of the solution 25. In a case where the mass of the fiber material is represented by M1 and the mass of the solvent is represented by M2, the concentration C is obtained by the expression $\{M1/(M1+M2)\} \times 100$. In this example, M1 represents the mass of the cellulosic polymer 15, and M2 represents the mass of the solvent 26. Q represents the jet amount of the solution 25 from the nozzle 27 (the volume of the solution jetted per hour, unit: ml/h, milliliters/hour). $\rho 2$ represents the density of the solution 25 (unit: g/ml). Therefore, the evaporation rate V can be adjusted by increasing or reducing at least one of the concentration C, the jet amount Q, or the density $\rho 2$. The evaporation rate V can also be adjusted by adjusting the recipe of the solvent 26 (for example, the component ratio in a case where a mixture of a plurality of components is used as the solvent 26). In addition, the average diameter Df can be adjusted by increasing or reducing at least one of the jet amount Q, the concentration C, an applied voltage to be described later, or a distance L from the nozzle 27 to the support 28. In this example, since the temperature of a spinning space, which is a space between the nozzle 27 and the support 28, is substantially 25°C, the evaporation rate V is obtained at a temperature of 25°C, that is substantially the same as that of the spinning space.

$$V = \{(1-0.01C) \times Q \times 10^{-3}\}/(3600 \times \rho 2) \, ... \, (1)$$

The solvent 26 may be formed of one kind of compound or two or more kinds of compounds. Since the solvent 26 not only dissolves the fiber material, but also has a function of adjusting the evaporation rate V, the solvent is preferably a mixture formed of two or more kinds of compounds from the viewpoint of adjusting the evaporation rate V. In this example, the solvent 26 is a mixture, and contains a plurality of compounds. For example, dichloromethane is used as a first compound 26a, and methanol is used as a second compound 26b. In addition to the first compound 26a and the second compound 26b, other compounds different from the first compound 26a and the second compound 26b are used as a third compound, a fourth compound, ..., respectively, and the solvent 26 may be formed of three or more kinds of compounds.

The boiling point of the solvent 26 is preferably 90°C or lower. In a case where the solvent 26 is a mixture of a plurality of compounds, the boiling point of a compound having the largest mass ratio is regarded as the boiling point of the solvent 26. In a case where the solvent 26 is a mixture of three or more kinds of compounds and a plurality of compounds have the largest mass ratio, the boiling point of a compound having the highest boiling point among the compounds is regarded as the boiling point of the solvent 26. For example, in a case where the solvent 26 is a mixture of a compound a, a compound b, and a compound c, and the two compounds a and b have the largest mass ratio so that (mass of compound a):(mass of compound b):(mass of compound c)=40:40:20 is set, the boiling point of one of the compound a and compound b having a higher boiling point is regarded as the boiling point of the solvent 26. The solvent 26 is preferably an organic compound, that is, an organic solvent.

In a case where cellulose acylate is used as the cellulosic polymer 15, methanol, ethanol, isopropanol, butanol, benzyl alcohol, acetone, methyl ethyl ketone, cyclohexanone, methyl acetate, ethyl acetate, propyl acetate, butyl acetate, methyl formate, ethyl formate, hexane, cyclohexane, dichloromethane, chloroform, carbon tetrachloride, benzene, toluene, xylene, dimethylformamide, N-methylpyrrolidone, diethyl ether, dioxane, tetrahydrofuran, and/or 1-methoxy-2-propanol can be used for the solvent 26.

The solvent 26 may be used alone or in combination of two or more kinds, and is preferably a mixture of two or more kinds of compounds for the reason of controlling the fiber diameter. The solvent 26 preferably contains dichloromethane and methanol. In a case where the solvent 26 contains at least the two compounds, the evaporation rate V is adjusted in a case where the cellulosic polymer 15 is used, whereby the spinning is preferably performed and the fibers 11 are thus preferably formed.

In addition, in a case where PMMA is used as the fiber material, methanol, dichloromethane, chloroform, toluene, acetone, and/or tetrahydrofuran can be used for the solvent 26. These may also be used alone or in combination of two or more kinds.

The moisture content of the fibers 11 on the support 28 is preferably 3.0% or more, that is, at least 3.0%. The moisture content is more preferably in a range of 3.0% or more and 10.0% or less, even more preferably in a range of 4.0% or more and 9.0% or less, and particularly preferably in a range of 5.0% or more and 8.0% or less.

In this example, the nonwoven fabric manufacturing facility 20 includes pipes 33a to 33c connecting the solution preparation portion 21 and the nonwoven fabric manufacturing device 22, and the nonwoven fabric manufacturing device 22 has nozzles 27a to 27c disposed in a state of being separated from each other. The pipes 33a to 33c are for introducing the solution 25. The pipe 33a connects the solution preparation portion 21 and the nozzle 27a, the pipe 33b connects the solution preparation portion 21 and the nozzle 27b, and the pipe 33c connects the solution preparation portion 21 and the nozzle 27c. Accordingly, the solution 25 is discharged from each of the nozzles 27a to 27c. The solution 25 discharged from each of the nozzles 27a to 27c forms the fibers 11. In the following description, in a case where the pipes 33a, 33b, and 33c are not distinguished, the pipe 33 is written.

In this example, a long support 28 is used for collecting and depositing (hereinafter, collectively referred to as accumulating) the fibers 11 and for supporting the nonwoven fabric material 10a, and the support 28 is moved in a longitudinal direction. The details of the support 28 will be described later using another drawing. The lateral direction in Fig. 3 is a width direction of the support 28, and the depth direction in Fig. 3 is a moving direction of the support 28. The nozzles 27a to 27c are arranged in this order in the width direction of the support 28. In this example, three nozzles 27 are provided, but the number of nozzles 27 is not limited thereto. Each of the pipes 33a to 33c is provided with a pump 38 which sends the solution 25 to the nozzle 27. By changing the rotation speed of the pump 38, the jet amount of the solution 25 discharged from each of the nozzles 27a to 27c is adjusted.

The nozzles 27a to 27c are held by a holding member 41. The holding member 41 and the nozzle 27 constitute a nozzle unit 42 of the nonwoven fabric manufacturing device 22.

The nonwoven fabric manufacturing device 22 will be described with reference to Fig. 4. Fig. 4 shows the device viewed from the side of the nozzle 27a of Fig. 3, and only the nozzle 27a is shown as the nozzle 27. The nonwoven fabric manufacturing device 22 includes a chamber 45, the above-described nozzle unit 42, an accumulating portion 50, a power source 51, and the like.

The chamber 45 houses, for example, the nozzle unit 42, a part of the accumulating portion 50, and the like. The chamber 45 can be hermetically sealed, and thus prevents a solvent gas from leaking outside. The solvent gas is formed by vaporization of the solvent 26 of the solution 25.

The chamber 45 includes a humidity adjusting mechanism 45a which adjusts the internal relative humidity (hereinafter, simply referred to as humidity). The humidity adjusting mechanism 45a sends a gas whose humidity has been adjusted (for example, air) to the chamber 45 to recover the atmosphere in the chamber 45. After that, the mechanism adjusts the humidity, and then sends the gas again to the chamber 45. In this way, the humidity inside the chamber 45 is adjusted. The humidity adjustment is performed to adjust the humidity of the above-described spinning space. That is, the chamber 45 also has a function of partitioning the spinning space from the external space, thereby adjusting the humidity of the spinning space. The adjustment of the humidity of the spinning space is not limited to the method using the chamber 45 in this example. For example, the humidity of the spinning space may be adjusted by a chamber defining the spinning space in the chamber 45.

The humidity of the spinning space is preferably 10% or more and 30% or less. The humidity may change during the formation of the fibers 11 and the manufacturing of the nonwoven fabric material 10a as long as it is in the above range. The humidity of the spinning space is more preferably in a range of 15% or more and 25% or less.

The nozzle unit 42 is disposed in an upper portion in the chamber 45. A tip end of the nozzle 27 from which the solution 25 is discharged is directed toward a collector 52 disposed below the nozzle 27 in Fig. 4. In a case where the solution 25 is discharged from an opening formed at the tip end of the nozzle 27 (hereinafter, referred to as a tip end opening), the solution 25 forms a substantially conical Taylor cone 53 at the tip end opening.

The accumulating portion 50 is disposed below the nozzle 27. The accumulating portion 50 has a collector 52, a collector rotating portion 56, a support supply portion 57, and a support winding portion 58. The collector 52 is for attracting the solution 25 discharged from the nozzle 27 and for collecting the formed fiber 11 as a part of the nonwoven fabric material 10a. In this embodiment, first, the dense layer member 14a which is a first layer material is collected on the support 28 to be described later, and then the coarse layer member 12a which is a second layer material is collected on the first layer material.

The collector 52 is formed of an endless belt composed of a metal strip formed in an annular shape. The collector 52 may be made of a material charged by applying a voltage by the power source 51, and is made of, for example, stainless steel. The collector rotating portion 56 includes a pair of rollers 61 and 62, a motor 60, and the like. The collector 52 is horizontally hung on the pair of rollers 61 and 62. The motor 60 disposed outside the chamber 45 is connected to the shaft of one roller 61 to rotate the roller 61 at a predetermined speed. Due to the rotation, the collector 52 is moved and circulated between the rollers 61 and 62. In this embodiment, the moving speed of the collector 52 is, for example, 0.2 m/min, but is not limited thereto.

A support 28 consisting of, for example, a strip-shaped aluminum sheet is supplied to the collector 52 by the support supply portion 57. The support 28 is for accumulating the fibers 11 and for obtaining the nonwoven fabric material 10a. The support supply portion 57 has a delivery shaft 57a. A support roll 63 is mounted on the delivery shaft 57a. The support roll 63 has a configuration in which the support 28 is wound around a winding core 64. The support winding portion 58 has a winding shaft 67. The winding shaft 67 is rotated by a motor (not shown), and the support 28 on which the nonwoven fabric material 10a is formed is wound around a set winding core 68. As described above, the nonwoven fabric manufacturing device 22 has a function of forming the fibers 11 and a function of forming the nonwoven fabric material 10a. The support 28 may be placed on the collector 52 and moved by moving the collector 52.

The nonwoven fabric material 10a may be formed by directly accumulating the fibers 11 on the collector 52. However, the nonwoven fabric material 10a may be stuck and difficult to peel off depending on the material forming the collector 52, the surface condition of the collector 52, or the like. Therefore, as in this embodiment, a support 28 to which the nonwoven fabric material 10a is hard to stick is preferably introduced onto the collector 52 to accumulate the fibers 11 on the support 28.

The power source 51 is a voltage applying portion which applies a voltage to the nozzle 27 and the collector 52 to charge the nozzle 27 to a first polarity and to charge the collector 52 to a second polarity reverse to the first polarity. The solution 25 is charged by passing through the charged nozzle 27, and is discharged from the nozzle 27 while being charged. In this example, the holding member 41 and the nozzle 27 are electrically connected, and by connecting the power source 51 to the holding member 41, a voltage is applied to the nozzle 27 via the holding member 41. However, the method of applying a voltage to the nozzle 27 is not limited thereto. For example, a voltage may be applied to each nozzle 27 by connecting the power source 51 to each nozzle 27. In this embodiment, the nozzle 27 is positively (+) charged and the collector 52 is negatively (-) charged. The polarities of the nozzle 27 and the collector 52 may be opposite. The collector 52 may be grounded to have a potential of 0. Due to the charging, the solution 25 is ejected as a spinning jet 69 from the Taylor cone 53 toward the collector 52. In this example, the solution 25 is charged by applying a voltage to the nozzle 27. However, the solution 25 may be charged in the pipe 33, and the charged solution 2 may be introduced to the nozzle 27.

A distance L between the nozzle 27 and the collector 52 varies depending on the kinds of the cellulosic polymer 15 and the solvent 26, the mass ratio of the solvent 26 in the solution 25, or the like, and is preferably in a range of 30 mm or more and 500 mm or less. In this embodiment, the distance L is, for example, 150 mm.

The voltage (applied voltage) which is applied to the nozzle 27 and the collector 52 is preferably 5 kV or more and 200 kV or less. From the viewpoint of making the fibers 11 thinner, the applied voltage is preferably as high as possible in the above range. In this embodiment, the voltage is, for example, 40 kV.

For the coarse layer member 12a, the fibers 11b are not collected on the collector 52 or the support 28, but collected on the dense layer member 14a formed on the collector 52 or the support 28. Therefore, the conditions such as the applied voltage in the electric field spinning may be different from those in a case where the fibers 11a forming the dense layer portion 14 are collected.

Using the nonwoven fabric manufacturing facility 20 as described above, first, the fibers 11a are formed on the surface of the collector 52 or the support 28 by the use of the cellulosic polymer 15a forming the dense layer member 14a. The fibers 11a forming the dense layer member 14a are formed to have a desired length on the support 28 in the transport direction, and then the support 28 on which the dense layer member 14a is formed is disposed on the upstream side of the movement of the collector 52 of the nonwoven fabric manufacturing device 22. Specifically, for example, after formation of the dense layer member 14a, the collector 52 or the support 28 is returned and disposed on the upstream side in the moving direction of the collector 52 in a desired distance by reversing the transport direction. After that, the switching portion 23 switches the cellulosic polymer 15 to the cellulosic polymer 15b, and then the fibers 11b are formed again using the same nonwoven fabric manufacturing facility 20.

Next, the method using the nonwoven fabric manufacturing device 22a having two nozzle units 42a and 42b as shown in Fig. 5 will be described. The two nozzle units 42a and 42b are installed side by side in the transport direction of the collector 52. The cellulosic polymer 15a (first solution) forming the dense layer member 14a is sent to the solution preparation portion 21 by the nozzle unit 42a at the front part in the transport direction to form the dense layer member 14a (first collecting step). Next, the cellulosic polymer 15b (second solution) forming the coarse layer portion 12 is sent to the solution preparation portion 21 by the nozzle unit 42b installed behind the nozzle unit 42a in the transport direction to form the coarse layer member 12a (second collecting step). The fibers 11a, the fibers 11b, and the nonwoven fabric 10 are formed in the same manner as in the above description.

Following the first collecting step and the second collecting step using the nonwoven fabric manufacturing facility 20 as described above, a tension imparting step of imparting a tension in the in-plane direction of the nonwoven fabric material 10a including the dense layer member 14a (first layer material) and the coarse layer member 12a (second layer material) formed, and a heating step of heating the nonwoven fabric material 10a to which the tension is imparted are performed.

The tension imparting step is a step of imparting a tension in the in-plane direction of the obtained nonwoven fabric material 10a. In the tension imparting step, a tension is imparted in the in-plane direction of the obtained nonwoven fabric material 10a, that is, in the X-Y direction in Fig. 1. The tension is preferably imparted evenly in the in-plane direction. The tension to be imparted can be appropriately set according to the application or the like, and is preferably suppressed to be small so that the nonwoven fabric material 10a has neither wrinkles nor sagging, and thus the area of the nonwoven fabric material 10a (the area of the surface along the X-Y plane) is not changed as much as possible.

Any method can be used as the method of imparting a tension as long as the tension can be imparted evenly in the in-plane direction of the nonwoven fabric material 10a. Specific examples thereof include a method in which an end portion of the nonwoven fabric material 10a cut into a desired shape is nipped by clips at substantially equal intervals and the clips are fixed so that a tension is imparted in the in-plane direction of the obtained nonwoven fabric material 10a, and a method in which the nonwoven fabric material 10a cut into a desired shape such as a circular shape is held by a frame. The frame is a tension imparting member which imparts a tension to the nonwoven fabric material 10a. The frame has a circular shape in which the nonwoven fabric material 10a is held in a state in which the nonwoven fabric material 10a is exposed at the center, but the tension imparting member is not limited to the frame as long as the above-described tension can be imparted so that the area of the nonwoven fabric material 10a is not changed. In order to more reliably prevent the occurrence of wrinkles and sagging during heating and cooling to be described later, the tension imparting member preferably holds the entire periphery of the nonwoven fabric material 10a, rather than a part of the periphery.

Next, the heating step is performed on the nonwoven fabric material 10a to which the tension is imparted. The heating step is a step of forming the nonwoven fabric 10 by applying heat to the nonwoven fabric material 10a in a state in which the tension is imparted. The heating step is preferably performed so that the nonwoven fabric 10 is heated in a state in which the tension is imparted, and the number of fusion points in the dense layer portion 14 is in the above specific range. Due to the heating step, a nonwoven fabric 10 in which in the dense layer portion 14a, the fibers 11b are fused to each other as described above, the void volume Pd is 70% or more, the relative standard deviation of pore diameter distribution is 20% or less, the void volume Pc of the coarse layer portion 12 and the void volume Pd of the dense layer portion 14 satisfy a relationship of Pc>Pd, and the average pore diameter Dc of the coarse layer portion 12 and the average pore diameter Dd of the dense layer portion 14 satisfy a relationship of Dc>Dd is obtained.

Specifically, the heating step uses, for example, a temperature adjusting device. The temperature adjusting device includes a storage portion and a temperature control mechanism which adjusts the temperature of the storage portion. The heating step can be performed by housing the nonwoven fabric material 10a held by clips, a frame, or the like in a state in which the tension is imparted in the housing portion including the temperature control mechanism of the temperature adjusting device, and heating the nonwoven fabric material 10a via the housing portion. The fibers 11 are adhered to each other in the nonwoven fabric material 10a whose temperature has been increased by heating the nonwoven fabric material 10a in a state in which the tension is imparted, and thus the nonwoven fabric 10 is obtained.

The longer the heating step time, the larger the number of fusion points in the dense layer portion 14. From the viewpoint of suppression of excessive melting of the fibers 11, the heating step time is preferably in a range of 10 seconds or longer and 1,200 seconds or shorter, and more preferably in a range of 30 seconds or longer and 900 seconds or shorter. The heating step time is a period of time in which the temperature of the nonwoven fabric material 10a is maintained to a set temperature.

Here, the melting point of the cellulosic polymer 15 is represented by Tm (unit: °C), and the glass transition point is represented by Tg (unit: °C). In the heating step, the nonwoven fabric material 10a is preferably heated to a temperature of Tg or higher and Tm or lower. In a case where the nonwoven fabric material is heated to a temperature of Tg or higher, the fibers 11 are softened and more easily fused to each other (adhered by melting) than in a case where the nonwoven fabric material is heated to a temperature lower than Tg. In addition, in a case where the nonwoven fabric material is heated to a temperature of Tm or lower, excessive melting of the fibers 11, leading to a film state having no voids or carbonization, is more reliably prevented than in a case where the nonwoven fabric material is heated to a temperature higher than Tm.

Regarding the melting point of the cellulosic polymer 15a forming the dense layer portion 14 and the melting point of the cellulosic polymer 15b forming the coarse layer portion 12, the melting point of the cellulosic polymer 15a is preferably lower than the melting point of the cellulosic polymer 15b, and a difference between the melting points is preferably 10 degrees or more. The difference is more preferably 20 degrees or more, and even more preferably 30 degrees or more. Accordingly, it is possible to more reliably obtain a nonwoven fabric 10 in which in the coarse layer portion 12, the void volume Pc is at least 90% and the average pore diameter Dc is in a range of 0.5 $\mu$m or more and

50 μm or less, in the dense layer portion 14, the void volume Pd is at least 70% and the relative standard deviation of pore diameter distribution is 20% or less, the void volume Pc of the coarse layer portion and the void volume Pd of the dense layer portion satisfy a relationship of Pc>Pd, and the average pore diameter Dc of the coarse layer portion and the average pore diameter Dd of the dense layer portion satisfy a relationship of Dc>Dd.

A cooling step is preferably performed after the heating step. That is, the nonwoven fabric 10 obtained in the heating step is preferably cooled in a state in which the tension is imparted (cooling step). Accordingly, a predetermined pore ratio of the nonwoven fabric 10 is more likely to be maintained to the state immediately after the heating step. The tension is preferably released after the cooling step.

In a case where the tension imparting step and the heating step are continuously performed on the nonwoven fabric material 10a as described above, the fibers 11b are fused to each other especially in the dense layer portion 14a. The heating step is preferably performed so that the number of fusion points in the dense layer portion 14 is in the above specific range. In the coarse layer portion 12, the fibers 11a may not be fused to each other in the heating step by adjusting the cellulosic polymer 15b to be used.

A hydrophilization step may be performed on the nonwoven fabric material 10a or the nonwoven fabric 10. The hydrophilization step is a step of imparting hydrophilicity to the nonwoven fabric material 10a or the nonwoven fabric 10. By imparting hydrophilicity to the nonwoven fabric material 10a or the nonwoven fabric 10 in the hydrophilicity imparting step, in a case where the nonwoven fabric 10 is used as a filter, compatibility between the filter and an aqueous solution is improved, and this leads to an improvement in filtration speed. In addition, by adjusting the degree of impartation of hydrophilicity in the hydrophilicity imparting step, CWST can be kept in a specific range.

The hydrophilization step may be performed on the nonwoven fabric material 10a before the tension imparting step. The hydrophilization step may be performed on the nonwoven fabric 10 after the heating step.

For example, in a case where the nonwoven fabric material 10a or the nonwoven fabric 10 is a cellulosic polymer, a saponification treatment step can be performed on the nonwoven fabric material 10a or the nonwoven fabric 10 as the hydrophilization step. The saponification treatment is performed by bringing a saponification solution into contact with the nonwoven fabric material 10a or the nonwoven fabric 10. Therefore, specifically, the saponification treatment can be performed by a method such as immersion of the nonwoven fabric material 10a or the nonwoven fabric 10 in the saponification solution or spraying of the saponification solution onto the nonwoven fabric material 10a or the nonwoven fabric 10.

The saponification solution contains alkali. In this embodiment, the alkali is potassium hydroxide (KOH), but is not limited thereto. Sodium hydroxide (NaOH) may be used instead of KOH. The saponification solution contains a solvent in addition to the alkali. The solvent includes water and organic solvents. As the organic solvent, one or more kinds selected from the group consisting of alcohols, ethers, amides, and sulfoxides can be used. As the alcohols, alcohols having 2 or more and 8 or less carbon atoms are preferable. Examples of the alcohols having 2 or more and 8 or less carbon atoms include ethanol, isopropyl alcohol, 1-propanol, 1-butanol, hexanol, ethylene glycol, glycerin, propylene glycol, butylene glycol, and pentaerythritol. Among these, isopropyl alcohol is particularly preferable, and is also used in this embodiment. Examples of the ethers include diethyl ether, diethylene glycol, dipropylene glycol, ethylene glycol monomethyl ether, ethylene glycol monoethyl ether, diethylene glycol monomethyl ether, diethylene glycol monoethyl ether, and propylene glycol monomethyl ether. Examples of the amides include N,N-dimethylformamide and dimethylacetamide. Examples of the sulfoxides include dimethylsulfoxide.

The operations of the nonwoven fabric manufacturing facility 20 and the nonwoven fabric manufacturing method will be described. To the nozzle 27 and the collector 52 which is moved and circulated, a voltage is applied by the power source 51. Accordingly, the nozzle 27 is positively charged (first polarity), and the collector 52 is negatively charged (second polarity). The solution 25 is continuously supplied to the nozzle 27 from the solution preparation portion 21, and the support 28 is continuously supplied onto the moving collector 52. The solution 25 is positively charged (first polarity) by passing through each of the nozzles 27a to 27c, and is discharged from the tip end opening of each of the nozzles 27a to 27c while being charged.

The collector 52 attracts the solution 25 which is discharged from the tip end opening while being charged to the first polarity. Accordingly, a Taylor cone 53 is formed at the tip end opening, and a spinning jet 69 is discharged from the Taylor cone 53 toward the collector 52. The spinning jet 69, which is charged to the first polarity, splits to have a smaller diameter by repulsion due to the charge of the spinning jet, and/or extends to have a smaller diameter in a spiral orbit while heading toward the collector 52, and the fibers 11 are collected on the support 28. The fibers 11 are deposited in an extremely short time and collected as the nonwoven fabric 10. The thickness of the nonwoven fabric 10 can be adjusted by increasing or reducing the deposition amount. The deposition amount can be increased or reduced by, for example, adjusting the moving speed of the support 28.

By using a specific fiber material and employing a specific nonwoven fabric manufacturing method, a nonwoven fabric 10 in which fibers 11 having an average diameter Df in a range of 0.10 μm or more and 5.00 μm or less are formed, in the coarse layer portion 12, the void volume is 90% or more and the average pore diameter DA is in a range of 0.5 μm or more and 50 μm or less, and in the dense layer portion 14, the void volume is 70% or more and the relative standard deviation of pore diameter distribution is suppressed to 20% or less is easily obtained. Furthermore, in a case where 1≤V/Df is satisfied, the spinning jet 69 is thinner than in a case of V/Df<1, and thus the solvent 26 sufficiently evaporates and the fibers 11 having an average diameter Df in the above range reach the support 28. As a result, the fibers 11 are deposited on the support 28 in a state in which the fibers do not adhere to each other or the adhesive strength therebetween is extremely small even in a case where the fibers adhere to each other. In a case where V/Df≤10 is satisfied, the spinning jet 69 forms the fibers 11 without becoming beads (microspheres) and is collected more reliably than in a case of 10<V/Df. Since no beads are formed, no beads fill the voids 13 of the nonwoven fabric 10 on the support 28. As a result, the void volume is reliably 90% or more especially in the coarse layer portion 12.

Since the humidity of the spinning space is adjusted to be 10% or more and 30% or less, the moisture content of the fibers 11 on the support 28 is reliably 3.0% or more and does not exceed 10%. In a case where the moisture content of the fibers 11 on the support 28 is 3.0% or more, the spinning jet 69 produced subsequently is more reliably accumulated as the fibers 11 on the support 28 than in a case where the moisture content is less than 3.0%. It is thought this is because the fibers 11 collected on the support 28 serves for a ground function to release the charge due to the moisture contained therein, and thus the spinning jet 69 produced subsequently in the spinning space heads toward the support 28 in a state in which it is suppressed so as not to be scattered therearound, forms the fibers 11, and reaches the support. In addition, in a case where the moisture content of the fibers 11 is 3.0% or more, the nonwoven fabric 10 is more reliably manufactured with a void volume of 90% or more in the coarse layer portion 12 and a void volume of 70% or more in the dense layer portion 14, along with 1≤V/FD≤10. In a case where the moisture content is 10% or less, the deformation of the fibers 11 which has absorbed the moisture by their own weight is suppressed as compared to a case where the moisture content is more than 10%, and a high void volume is easily maintained.

In a case where a solvent 26 having a boiling point of 90°C or lower is used, the solvent 26 more easily evaporates from the spinning jet 69, and excessive evaporation is suppressed than in a case where a solvent 26 having a boiling point higher than 90°C is used. In addition, in a case where a mixture of specific compounds is used as the solvent 26, an appropriate amount of the solvent 26 evaporates while the spinning jet 69 passes through the spinning space whose humidity has been adjusted, and the balance between the spinning space and the moisture is maintained as compared to a case where water is used. As a result, the degree of drying of the fibers 11 and the moisture content are easily balanced.

The fibers 11 forms a nonwoven fabric 10 consisting of a specific coarse layer portion 12 and a specific dense layer portion 14, and is sent to the support winding portion 58 together with the support 28. The nonwoven fabric 10 is wound around the winding core 68 in a state of being overlapped with the support 28. After the winding core 68 is removed from the winding shaft 67, the nonwoven fabric 10 is separated from the support 28. The nonwoven fabric 10 thus obtained is long, and may be then cut into, for example, a desired size.

In this example, a belt which is moved and circulated is used as the collector 52, but the collector is not limited to the belt. For example, the collector may be a fixed flat plate or a cylindrical rotating body. Even in the case of a collector consisting of a flat plate or a cylindrical body, the support 28 is preferably used so that the nonwoven fabric 10 can be easily separated from the collector. In a case where a rotating body is used, a tubular sheet material consisting of fibers is formed on a peripheral surface of the rotating body. Accordingly, the tubular sheet material may be removed from the rotating body after spinning, and cut into a desired size and shape.

In the above examples, the nozzle 27 is disposed in a posture in which the tip end opening thereof is directed downward, and the collector 52 is disposed below the nozzle 27 to jet the solution 25 downward. However, the jet direction of the solution 25 is not limited to this example. For example, the nozzle 27 may be disposed in a posture in which the tip end opening thereof is directed upward, and the collector 52 may be disposed above the nozzle 27 to jet the solution 25 upward.

Examples

[Example 1] to [Example 8]

Nonwoven fabrics 10 were manufactured using a sheet material forming facility 20 (Fig. 3) and a temperature adjusting device, and used as Examples 1 to 7. That is, using one nonwoven fabric manufacturing facility 20, a nonwoven fabric material 10a including a coarse layer portion 12 and a dense layer portion 14 was manufactured by switching between a cellulosic polymer 15a forming the dense layer portion 14 and a cellulosic polymer 15b forming the coarse layer portion 12 with a switching portion 23. The manufactured nonwoven fabric material 10a was cut into a circular shape. An edge portion thereof was nipped by clips at several places so that no wrinkles or sagging occurred, and the clips were fixed to a circular frame to impart a tension to the nonwoven fabric material 10a (tension imparting step). Then, in a case where a heating treatment was performed, heating was performed by a heating treatment device (heating step). After heating, cooling was performed to perform various measurements.

The cellulosic polymer 15 used was written in the column "Material" in Table 1. In Table 1, in a case where the cellulose acylate used as the polymer was cellulose triacetate, "TAC" was written, in a case where the cellulose acylate was cellulose diacetate, "DAC" was written, in a case where the cellulose acylate was cellulose acetate propionate whose acyl group was a propionyl group, "CAP" was written, and in a case where the cellulose acylate was cellulose acetate butyrate whose acyl group was a butanoyl group, "CAB" was written. As the materials, Cellulose Acetate Propionate and Cellulose Acetate Butyrate manufactured by Eastman Chemical Company were used.

A solvent 26 was a mixture of dichloromethane and methanol as described above in any case, and the mass ratio of dichloromethane:methanol was 87:13. The concentration of the cellulosic polymer 15 in a solution 25 was 8 mass% in any case. This concentration was obtained by $\{M1/(M1+M2)\}\times100$ in a case where the mass of the cellulosic polymer 15 was represented by M1 and the mass of the solvent 26 was represented by M2.

In a case where the heating step was performed after the tension imparting step, "presence" was written in the column "Presence or Absence" of "Heating Step" in Table 1. In a case where the heating step was not performed, "absence" was written. In addition, the temperature of the nonwoven fabric material 10a and the holding time at the above temperature set in the heating step were written in the column "Temperature" and the column "Time" of "Heating Step" in Table 1, respectively.

As the void volume in the coarse layer portion 12 or the dense layer portion 14 of the obtained nonwoven fabric 10, the values measured by the above-described method were written in the column "Void Volume" of "Coarse Layer Portion" and the column "Void Volume" of "Dense Layer Portion" in Table 1, respectively. Similarly, as the average diameter and the average pore diameter, the values measured by the above-described methods were written in the column "Average Diameter" and the column "Average Pore Diameter" of "Coarse Layer Portion" and in the column "Average Diameter" and the column "Average Pore Diameter" of "Dense Layer Portion" in Table 1, respectively. In addition, as for the dense layer portion, the relative standard deviation of pore diameter distribution was measured by the above-described method, and written in the column "Relative Standard Deviation CV value of Pore Diameter Distribution" in Table 1.

In addition, as the number of fusion points in the dense layer portion 14, the value measured by the above-described method was written in the column "Number of Fusion Points" in Table 1. In Comparative Example 1 in which the heating step was not performed, the number of fusion points in the dense layer portion 14 was $67/mm^2$. In a case other than Comparative Example 1 where the heating step was performed, the number of fusion points in the dense layer portion 14 after the heating step was in a range of $2,000/mm^2$ or more and less than $10,000/mm^2$.

The filtration service life and filtration accuracy of the obtained nonwoven fabric 10 were evaluated. As evaluation of the filtration service life, the value of CWST was measured, and the result was written in the column "CWST". In addition, as another evaluation of the filtration service life, the following filtration service life evaluation was performed. The filtration service life evaluation method and the evaluation standards are as follows. The evaluation results are shown in Table 1.

As evaluation of the filtration accuracy, size separation performance was evaluated. The evaluation method and the evaluation standards are as follows. The evaluation results are shown in Table 1.

In addition, the evaluation result in the column "Filtration Service Life" and the evaluation result in the column "Size Separation Performance" column were comprehensively judged to write the judgement in "Comprehensive Evaluation of Filtration Performance" in Table 1. The evaluation method and the evaluation standards are as follows. The evaluation results are shown in Table 1.

1. CWST

CWST was measured using an aqueous solution of calcium chloride, an aqueous solution of sodium hydroxide, and a mixed liquid of water and ethanol. 10 drops of each of the above-described aqueous solutions having different surface tensions were gently placed on a first surface 10A, which was the coarse layer surface of the nonwoven fabric 10 held horizontally, and were left for 10 minutes. In a case where 9 or more drops out of 10 drops moistened the surface, the nonwoven fabric 10 was judged to be moistened with the solution having that surface tension, and in a case where 2 or more drops out of 10 drops did not moisten the surface, the nonwoven fabric 10 was judged to be not moistened with the solution having that surface tension. An average of the surface tensions of the solution which moistened the surface and the surface tension of the solution which did not moisten the surface was defined as CWST of the nonwoven fabric 10.

2. Filtration Service Life

The nonwoven fabric 10 was attached to a stainless line holder (KS-47 manufactured by Advantec Co., Ltd.), and an aqueous solution prepared by dispersing 0.1 mass% of crosslinked acrylic polydisperse particles (manufactured by Soken Chemical & Engineering Co., Ltd.) having an average particle diameter of 10 $\mu$m in pure water was flowed from the coarse layer portion 12 and filtered. A pressure gauge (manufactured by KEYENCE CORPORATION) was attached in front of the stainless line holder to set a primary pressure at filtration, and the filtration capacity until the primary pressure at filtration exceeded 20 kPa was measured. From the obtained filtration capacity, the filtration service life was evaluated according to the following standards. A, B, and C represent pass, and D represents fail.

A: The filtration capacity is 250 mL or more.
B: The filtration capacity is 150 mL or more and less than 250 mL.
C: The filtration capacity is 50 mL or more and less than 150 mL.
D: The filtration capacity is less than 50 mL.

3. Size Separation Performance Evaluation

The particle size distribution of each of a pre-filtration liquid and a post-filtration liquid filtered until the pressure exceeded 20 kPa was measured using a particle size distribution measuring device (manufactured by Beckman Coulter, Inc.). From the obtained particle size distributions before and after the filtration, a transmittance of particles was calculated by Expression (2).
(Number of Particles After Filtration)/(Number of Particles Before Filtration)×100% ... (2)
The transmittance of particles calculated was evaluated according to the following standards. A, B, and C represent pass, and D represents fail.

A: The transmittance of particles larger than the average pore diameter of the dense layer portion is 0%, and the transmittance of particles smaller than the average pore diameter of the dense layer portion is 25% or more.
B: The transmittance of particles larger than the average pore diameter of the dense layer portion is 0%, and the transmittance of particles smaller than the average pore diameter of the dense layer portion is 15% or more and less than 25%.
C: The transmittance of particles larger than the average pore diameter of the dense layer portion is 0%, and the transmittance of particles smaller than the average pore diameter of the dense layer portion is less than 15%.
D: The transmittance of particles larger than the average pore diameter of the dense layer portion is not 0%.

4. Comprehensive Evaluation of Filtration Performance

In order to comprehensively evaluate "CWST", "filtration service life", and "size separation performance", the lowest evaluation result among the results of the evaluations was defined as a result of "comprehensive evaluation of filtration performance". A and B represent pass, and C and D represent fail. The results are shown in the column "Comprehensive Evaluation of Filtration Performance" in Table 1.

[Table 1]

| | Coarse Layer Portion | | | | Dense Layer Portion | | | | | | Heating Step | | | CWST (mN/m) | Filtration Service Life | Size Separation Performance | Comprehensive Evaluation of Filtration Performance |
|---|---|---|---|---|---|---|---|---|---|---|---|---|---|---|---|---|---|
| | Material | Void Volume Pc (%) | Average Diameter Df (um) | Average Pore Diameter Dc (um) | Material | Void Volume Pd (%) | Average Diameter Df (um) | Average Pore Diameter Dd (um) | Number of Fusion Points (number/mm2) | Relative Standard Deviation CV value of Pore Diameter Distribution (%) | Presence or Absence | Temperature (°C) | Time (min) | | | | |
| Example 1 | TAC | 91.8 | 1.5 | 9.5 | CAP | 74.2 | 2.6 | 8.2 | 6376 | 8 | Presence | 200 | 5 | 60 | C | A | C |
| Example 2 | TAC | 97.5 | 1.8 | 10.8 | CAP | 76.8 | 2.5 | 8.6 | 7003 | 9 | Presence | 200 | 5 | 60 | B | A | B |
| Example 3 | TAC | 96.6 | 1.6 | 9.9 | CAP | 75.5 | 2.5 | 8.4 | 9093 | 9 | Presence | 200 | 5 | 85 | B | A | B |
| Example 4 | TAC | 97.2 | 1.7 | 10.6 | CAP | 90.1 | 2.1 | 8.1 | 2613 | 6 | Presence | 200 | 5 | 85 | A | A | A |
| Example 5 | TAC | 92.4 | 2.4 | 12.3 | CAB | 82.7 | 1.6 | 7.8 | 4390 | 13 | Presence | 200 | 5 | 85 | B | B | B |
| Example 6 | DAC | 91.8 | 2.2 | 12.3 | CAP | 85.1 | 2.2 | 7.9 | 5017 | 10 | Presence | 200 | 5 | 85 | C | B | C |
| Example 7 | DAC | 91.4 | 2.3 | 13.3 | CAB | 85.3 | 1.8 | 6.9 | 3972 | 15 | Presence | 200 | 5 | 85 | B | C | C |
| Comparative example 1 | TAC | 95.3 | 1.7 | 10.4 | CAP | 92.6 | 1.9 | 8.7 | 67 | 25 | Absence | - | - | 85 | A | D | D |
| Comparative example 2 | CAP | 68.1 | 2.7 | 9.5 | CAP | 75.5 | 2.4 | 7.9 | 8257 | 7 | Presence | 200 | 5 | 85 | D | A | D |

16

EP 4 033 022 A1

(continued)

| | Coarse Layer Portion | | | | Dense Layer Portion | | | | | | Heating Step | | | CWST (mN/m) | | | |
|---|---|---|---|---|---|---|---|---|---|---|---|---|---|---|---|---|---|---|
| | Materi-al | Void Vol-ume Pc | Aver-age Di-ameter Df | Aver-age Pore Di-ameter Dc | Materi-al | Void Vol-ume Pd | Aver-age Di-ameter Df | Aver-age Pore Di-ameter Dd | Number of Fusion Points | Relative Standard Deviation CV value of Pore Diameter Distribu-tion | Pres-ence or Ab-sence | Tempera-ture | Time | | Filtra-tion Service Life | Size Sepa-ration Per-formance | Comprehen-sive Evalua-tion of Filtra-tion Performance |
| | | (%) | (um) | (um) | | (%) | (um) | (um) | (number/m m$^2$) | (%) | | (°C) | (min) | | | | |
| Compara-tive exam-ple 3 | PP | 86.7 | 2.5 | 12.5 | CAP | 72.9 | 2.5 | 8.6 | 6062 | 8 | Presence | 200 | 5 | 70 | D | A | D |
| Compara-tive exam-ple 4 | PP | 87.9 | 1.8 | 11.1 | PP | 87.7 | 2.3 | 7.7 | 1672 | 24 | Presence | 230 | 5 | 70 | D | D | D |

[Comparative Example 1] to [Comparative Example 4]

Nonwoven fabrics 10 were prepared in the same manner as in Example 1, except that the materials and/or the manufacturing method to be used were changed. The used polymer was written in the column "Material" in Table 1. In Table 1, in a case where the used polymer was polypropylene, "PP" was written. As the polypropylene, polypropylene manufactured by Exxon Mobil Corporation was used.

The filtration service life and the filtration accuracy were evaluated with the same methods and standards as in the examples. The evaluation results are shown in Table 1. Explanation of References

10: nonwoven fabric
10A: first surface
10a: nonwoven fabric material
11, 11a, 11b: fibers
12: coarse layer portion
12A: surface of coarse layer portion
12a: coarse layer member
13: voids
14: dense layer portion
14a: dense layer member
15, 15a, 15b: cellulosic polymer
16: boundary portion
20: nonwoven fabric manufacturing facility
21: solution preparation portion
22, 22a: nonwoven fabric manufacturing device
23: switching portion
25: solution
26: solvent
26a: first compound
26b: second compound
27, 27a to 27c: nozzle
28: support
33, 33a to 33c: pipe
38: pump
41: holding member
42, 42a, 42b: nozzle unit
45: chamber
45a: humidity adjusting mechanism
50: accumulating portion
51: power source
52: collector
53: Taylor cone
56: collector rotating portion
57: support supply portion
57a: delivery shaft
58: support winding portion
60: motor
61, 62: roller
63: support roll
64: winding core
67: winding shaft
68: winding core
69: spinning jet
D1: diameter
Df: average diameter
Dc: average pore diameter of coarse layer portion
Dd: average pore diameter of dense layer portion
L: distance

Pc: void volume of coarse layer portion
Pd: void volume of dense layer portion
Z: thickness direction

**Claims**

1. A nonwoven fabric which is formed of fibers having an average diameter in a range of 0.10 $\mu$m or more and 5.00 $\mu$m or less, comprising:

   a coarse layer portion and a dense layer portion having different void volumes,
   wherein in the coarse layer portion, a void volume Pc is 90% or more and an average pore diameter Dc is in a range of 0.5 $\mu$m or more and 50 $\mu$m or less,
   in the dense layer portion, a void volume Pd is 70% or more and a relative standard deviation of pore diameter distribution is 20% or less, and
   the void volume Pc of the coarse layer portion and the void volume Pd of the dense layer portion satisfy a relationship of Pc>Pd, and the average pore diameter Dc of the coarse layer portion and an average pore diameter Dd of the dense layer portion satisfy a relationship of Dc>Dd.

2. The nonwoven fabric according to claim 1,
   wherein the dense layer portion has a fusion point at which the fibers are fused to each other, and the number of fusion points is 500/mm$^2$ or more.

3. The nonwoven fabric according to claim 1 or 2,
   wherein a surface on the coarse layer portion side has a critical wettable surface tension of 70 mN/m or more.

4. The nonwoven fabric according to any one of claims 1 to 3,
   wherein the fibers are made of a cellulosic polymer.

5. The nonwoven fabric according to any one of claims 1 to 3,
   wherein the fibers are made of cellulose acylate.

6. The nonwoven fabric according to any one of claims 1 to 5,
   wherein in the coarse layer portion, the fibers are made of cellulose triacetate or cellulose diacetate.

7. The nonwoven fabric according to any one of claims 1 to 6,
   wherein in the dense layer portion, the fibers are made of cellulose acetate propionate or cellulose acetate butyrate.

8. The nonwoven fabric according to any one of claims 1 to 7,
   wherein the fibers are continuous fibers.

9. The nonwoven fabric according to any one of claims 1 to 8,
   wherein the coarse layer portion and the dense layer portion are formed continuously and integrated with each other.

10. A nonwoven fabric manufacturing method in which a voltage is applied between a solution prepared by dissolving a fiber material in a solvent and a collector, and fibers formed by ejecting the solution from a nozzle are collected on a surface of the collector, comprising:

    a first collecting step of collecting fibers formed using a first solution as the solution to form a first layer material;
    a second collecting step of collecting fibers formed using a second solution different from the first solution as the solution to form a second layer material, following the first collecting step;
    a tension imparting step of imparting a tension in an in-plane direction of a nonwoven fabric material including the first layer material and the second layer material; and
    a heating step of heating the nonwoven fabric material to which the tension is imparted to form a first layer from the first layer material and/or to form a second layer from the second layer material.

11. The nonwoven fabric manufacturing method according to claim 10,
    wherein the fiber material is a cellulosic polymer.

12. The nonwoven fabric manufacturing method according to claim 10,
    wherein the fiber material is cellulose acylate.

13. The nonwoven fabric manufacturing method according to any one of claims 10 to 12,
    wherein in the first solution, the fiber material is cellulose triacetate or cellulose diacetate.

14. The nonwoven fabric manufacturing method according to any one of claims 10 to 13,
    wherein in the second solution, the fiber material is cellulose acetate propionate or cellulose acetate butyrate.

15. The nonwoven fabric manufacturing method according to any one of claims 10 to 14,
    wherein the solvent is a mixture of a plurality of compounds.

16. The nonwoven fabric manufacturing method according to claim 15,
    wherein the solvent contains dichloromethane and methanol.

17. The nonwoven fabric manufacturing method according to any one of claims 11 to 16, further comprising:
    a hydrophilization step of performing saponification.

18. A filter which is formed of the nonwoven fabric according to any one of claims 1 to 9, comprising:

    a coarse layer portion as one surface; and
    a dense layer portion as the other surface.

# FIG. 1

# FIG. 2

# FIG. 3

WIDTH DIRECTION
OF SUPPORT

# FIG. 4

SOLUTION —25

HUMIDITY ADJUSTING MECHANISM —45a

22

45

33a

P —38

42

41

27a

53

69

POWER SOURCE

51

L

11

10

57

50

28

62

61

58

63

64

57a

52

56

68

67

M —60

# FIG. 5

## INTERNATIONAL SEARCH REPORT

International application No.

PCT/JP2020/033917

### A. CLASSIFICATION OF SUBJECT MATTER
D04H 1/425(2012.01)i; B01D 39/16(2006.01)i; B32B 5/26(2006.01)i; D01D 5/04(2006.01)i; D04H 1/728(2012.01)i; D06M 11/38(2006.01)i
FI: D04H1/425; B01D39/16 A; B32B5/26; D01D5/04; D04H1/728; D06M11/38

According to International Patent Classification (IPC) or to both national classification and IPC

### B. FIELDS SEARCHED

Minimum documentation searched (classification system followed by classification symbols)
D04H1/00-18/04; B01D39/00-41/04; B32B1/00-43/00; D01D1/00-13/02; D06M11/00-11/84

Documentation searched other than minimum documentation to the extent that such documents are included in the fields searched
| | |
|---|---|
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | US 2008/0160856 A1 (KIMBERLY-CLARK WORLDWIDE, INC.) 03 July 2008 (2008-07-03) paragraphs [0053]-[0054], [0066]-[0067], [0097]-[0098], fig. 1A, 2C, 5 | 10-17 |
| Y | US 2017/0360971 A1 (EMD MILLIPORE CORPORATION) 21 December 2017 (2017-12-21) paragraphs [0003], [0027], [0039], [0064]-[0080] | 10-17 |
| Y | JP 2018-131692 A (FUJIFILM CORPORATION) 23 August 2018 (2018-08-23) claims, paragraphs [0016], [0018]-[0029] | 12-17 |
| Y | JP 2012-77388 A (TORAY INDUSTRIES, INC.) 19 April 2012 (2012-04-19) claims, paragraphs [0001], [0027], [0030]-[0031], [0051] | 12-17 |
| A | JP 2003-105543 A (TAISEI GIKEN CORP.) 09 April 2003 (2003-04-09) entire text | 1-18 |
| A | JP 2016-30866 A (ASAHI KASEI FIBERS CORP.) 07 March 2016 (2016-03-07) entire text | 1-18 |

☒ Further documents are listed in the continuation of Box C.   ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| | |
|---|---|
| Date of the actual completion of the international search<br>    06 November 2020 (06.11.2020) | Date of mailing of the international search report<br>    17 November 2020 (17.11.2020) |
| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

**INTERNATIONAL SEARCH REPORT**

International application No.

PCT/JP2020/033917

C (Continuation). DOCUMENTS CONSIDERED TO BE RELEVANT

| Category* | Citation of document, with indication, where appropriate, of the relevant passages | Relevant to claim No. |
|---|---|---|
| A | US 2016/0303498 A1 (HOLLINGSWORTH & VOSE COMPANY) 20 October 2016 (2016-10-20) whole document | 1-18 |
| A | JP 2014-12904 A (TEIJIN LTD.) 23 January 2014 (2014-01-23) entire text | 1-18 |
| A | US 2019/0022634 A1 (AMOGREENTECH CO., LTD.) 24 January 2019 (2019-01-24) whole document | 1-18 |

Form PCT/ISA/210 (continuation of second sheet) (January 2015)

International application no.

PCT/JP2020/033917

| Patent Documents referred in the Report | Publication Date | Patent Family | Publication Date |
|---|---|---|---|
| US 2008/0160856 A1 | 03 Jul. 2008 | WO 2006/049664 A1 KR 10-2007-0073851 A | |
| US 2017/0360971 A1 | 21 Dec. 2017 | CN 105477650 A | |
| JP 2018-131692 A | 23 Aug. 2018 | WO 2018/147068 A1 claims, paragraphs [0015], [0017]-[0028] KR 10-2019-0100406 A CN 110291241 A | |
| JP 2012-77388 A | 19 Apr. 2012 | (Family: none) | |
| JP 2003-105543 A | 09 Apr. 2003 | KR 10-2003-0027702 A | |
| JP 2016-30866 A | 07 Mar. 2016 | (Family: none) | |
| US 2016/0303498 A1 | 20 Oct. 2016 | CN 107530598 A | |
| JP 2014-12904 A | 23 Jan. 2014 | (Family: none) | |
| US 2019/0022634 A1 | 24 Jan. 2019 | WO 2017/048103 A1 KR 10-2017-0032873 A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013236986 A
- JP 1249063 A
- JP H01249063 A